(19) Europäisches Patentamt

European Patent Office

Office européen des brevets

(11) **EP 1 220 473 B1**

(12) **FASCICULE DE BREVET EUROPEEN**

(45) Date de publication et mention
de la délivrance du brevet:
**15.11.2006 Bulletin 2006/46**

(51) Int Cl.:
***H04B 7/08*** *(2006.01)*

(21) Numéro de dépôt: **01204959.9**

(22) Date de dépôt: **18.12.2001**

(54) **Récepteur en diversité d'espace et procédé de traitement pour des signaux reçus selon plusieurs voies**

Raumdiversitätsempfänger und Verfahren zur Verarbeitung der über mehrere Wege empfangenen Signale

Space-diversity receiver and method for processing signals received from several paths

(84) Etats contractants désignés:
**DE FR GB IT**

(30) Priorité: **26.12.2000 FR 0017045**

(43) Date de publication de la demande:
**03.07.2002 Bulletin 2002/27**

(73) Titulaire: **Koninklijke Philips Electronics N.V.**
**5621 BA Eindhoven (NL)**

(72) Inventeur: **Jacob, Hervé**
**75008 Paris (FR)**

(74) Mandataire: **Chaffraix, Jean**
**Société Civile SPID,**
**156, Boulevard Haussmann**
**75008 Paris (FR)**

(56) Documents cités:
**US-A- 4 850 037          US-A- 5 926 503**
**US-A- 5 930 305**

EP 1 220 473 B1

**Description**

L'invention concerne un appareil comportant un dispositif de réception travaillant en diversité d'espace pour des signaux modulés par des coefficients de code d'étalement dans le temps et pour des signaux reçus par au moins deux voies, dispositif de réception comprenant un circuit mélangeur et un circuit de démodulation par codes d'étalement, formé de branches de démodulation munies d'entrées de code.

L'invention concerne aussi un procédé de traitement de signaux reçus selon plusieurs voies.

L'invention trouve des applications lorsque la modulation par code d'étalement est utilisée (CDMA).

Dans des conditions de propagation difficiles il s'avère nécessaire de faire appel à la diversité d'espace. Le problème qui se pose alors est la multiplicité du matériel qu'il faut adjoindre à chacune des voies impliquées dans la réception de ces signaux. Ces voies sont constituées à partir d'antennes de réception.

Le document US5926503 décrit un récepteur en diversité d'espace qui déphase les signaux reçus par une des branches avant de leur combinaison

Un tel appareil est aussi connu du document de brevet Britannique n° 2 340 354. Dans ce document il est proposé de traiter les signaux issus de chacune des antennes. Une des opérations consiste à coder ces signaux sous forme numérique après un pré-traitement. La multiplicité de ces codeurs analogiques-numériques qui ont à traiter des signaux rapides est jugée désavantageuse tant en ce qui concerne leur encombrement qu'en ce qui concerne leur prix.

La présente invention propose un appareil du genre mentionné dans le préambule qui évite la multiplicité de ces codeurs.

Pour cela, un tel appareil est remarquable en ce que le circuit mélangeur déphase les signaux d'une des voies, tandis que les entrées de code de l'une des branches reçoivent le code d'étalement et les entrées d'au moins une autre branche reçoivent le code d'étalement conjugué.

L'idée de l'invention consiste donc à jouer sur les différents déphasages apportés d'une part par les codes d'étalement et d'autre part en déphasant les signaux de l'une des voies de sorte que les branches de démodulation reconstituent les données en faisant appel à la fois aux codes conjugués et aux codes non conjugués.

La description suivante, faite en regard des dessins ci-annexés, le tout donné à titre d'exemples non limitatifs fera bien comprendre comment l'invention peut être réalisée. Sur les dessins :

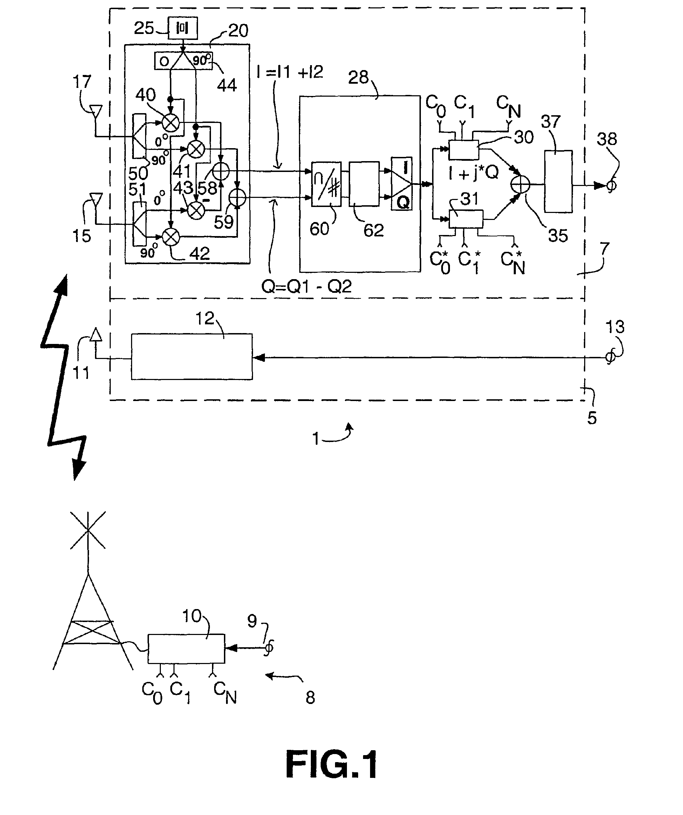

La figure 1 montre un appareil conforme à l'invention.

A la figure 1, on a représenté un appareil 1 conforme à l'invention. C'est un appareil de radiotéléphonie mobile cellulaire fonctionnant selon la modulation CDMA. Il se compose d'une partie émission 5 et d'une partie réception 7. Cet appareil est en relation avec une station de base 8 qui émet des informations qu'on applique à un accès de données 9. Selon cette modulation chaque donnée est « hachée » par un code d'étalement au moyen d'un modulateur de code 10. Ce code est une succession de N éléments ou coefficients complexes : $C_0$, $C_1$,...$C_N$. Chacun de ces coefficients complexes peut prendre, par exemple, une des valeurs (1+j, 1-j, -1+j, -1-j).

La partie émission 5 de l'appareil 1 est munie d'une antenne 11 qui émet au moyen d'un dispositif d'émission 12 des informations appliquées sur un accès pour émission 13.

La partie réception 7 de l'appareil 1 est munie d'une pluralité d'antennes de réception. Dans le cadre de l'exemple décrit, on en a représenté deux qui portent les références 15 et 17 respectivement. Les signaux captés par ces antennes sont traités, tout d'abord, par un circuit mélangeur 20 qui les mélange avec le signal d'un oscillateur 25. Les signaux issus de ce circuit se présentent sous forme complexe. Ils sont alors appliqués à un ensemble de codage filtrage 28 pour être appliqués à un récepteur de RAKE formé de deux branches 30 et 31, les signaux de ces deux branches 30 et 31 sont appliqués à un circuit de combinaison 35 constitué ici par un simple additionneur. Un circuit de mise en forme 37 les adapte pour les restituer à un accès 38.

Selon l'invention, le circuit mélangeur comporte quatre mélangeurs élémentaires 40, 41, 42 et 43. Les mélangeurs 40 et 42 reçoivent sur une de leurs entrées le signal en phase de l'oscillateur 25 via un réseau déphaseur 44 tandis que les entrées des mélangeurs 41 et 43 reçoivent, via ce même réseau déphaseur 44, le signal à 90° et -90° respectivement de ce même oscillateur 25. Ceci est noté par le signe « - » placé à proximité du mélangeur 43. Les autres entrées des mélangeurs 40 et 41 reçoivent respectivement les signaux en phase et en quadrature de l'antenne 17 ce qui est obtenu par un autre réseau déphaseur 50. De façon similaire les autres entrées des mélangeurs 43 et 42 reçoivent de l'antenne 15, les signaux en phase et en quadrature respectivement, ce qui est obtenu par un autre réseau déphaseur 51. Des additionneurs 58 et 59 additionnent, respectivement, les parties dites en phase formées par les mélangeurs 40 et 42 et les parties dites en quadrature formées par les mélangeurs 41 et 43. A la sortie de l'additionneur 58 on a un signal en phase I qui est la somme des signaux en phase fournis par les antennes 15 et 17 et à la sortie de l'additionneur 59 on a un signal Q qui est une différence des signaux en quadrature fournis par ces mêmes antennes. Pour résumer :

$$I = I1 + I2$$

$$Q= Q1-Q2$$

I1 et Q1 étant les signaux de l'antenne 17 et I2 et Q2 ceux de l'antenne 15.

Les signaux I et Q sont appliqués à l'ensemble de codage filtrage 28 comportant un seul codeur analogique-numérique double 60 (à cause de la nature complexe des signaux qui lui sont appliqués). Les signaux ainsi numérisés sont filtrés au moyen du filtre 62 du type conventionnel pour ce genre de signaux. Ils sont ensuite appliqués aux deux branches de RAKE 30 et 31.

Selon une autre mesure de l'invention les coefficient pour une branche de RAKE 30 sont les coefficients $C_0$, $C_1$,...$C_N$, tandis que ceux de l'autre branche de RAKE 31 sont les coefficients conjugués : $C_0^*$, $C_1^*$...$C_N^*$

L'invention est basée sur les considérations suivantes.

Chaque donnée à transmettre est découpée en tranches pour être modulée par un élément du code d'étalement qui est considéré comme un nombre complexe. Chaque tranche subit donc une rotation définie par l'élément du code d'étalement.

Si, à la réception, on effectue une démodulation au moyen des conjugués des éléments du code d'étalement, on fait subir aux tranches une rotation inverse de celle appliquée à l'émission ce qui permet de reconstituer la donnée.

Selon l'invention, grâce au circuit mélangeur, on fait subir une rotation opposée à celle de l'élément de code d'étalement pour les données reçues sur une voie. Si on applique le code non conjugué on reconstitue alors les données. Les données de l'autre voie sont brouillées car le code, non conjugué, n'est pas cohérent avec elles. Il en est de même des données de l'autre voie qui sont démodulées d'une manière cohérente avec le code conjugué, tandis que les données de la première voie sont incohérentes avec le code conjugué.

**Revendications**

1. Appareil comportant un dispositif de réception travaillant en diversité d'espace pour des signaux modulés par des coefficients de code d'étalement dans le temps et pour des signaux reçus par au moins deux voies (17,15), dispositif de réception comprenant un circuit mélangeur (20) et un circuit de démodulation par codes d'étalement (30,31), formé de branches de démodulation munies d'entrées de code, **caractérisé en ce que** le circuit mélangeur (20) déphase les signaux d'une des voies, tandis que les entrées de code de l'une des branches reçoivent le code d'étalement et les entrées d'au moins une autre branche reçoivent le code d'étalement conjugué.

2. Appareil selon la revendication 1, **caractérisé en ce que** les signaux reçus sont décomposés, avant mélange, en signaux complexes et **en ce que** le circuit mélangeur comporte une entrée de mélange pour inverser la partie imaginaire de l'un des signaux reçus.

3. Appareil selon la revendication 1 ou 2, **caractérisé en ce qu**'il est prévu un circuit de combinaison (35) pour combiner les signaux des deux branches.

4. Procédé de traitement pour des signaux reçus selon plusieurs voies, mis en oeuvre dans un appareil selon l'une des revendications 1 à 3 et ayant subi un étalement dans le temps par un code d'étalement formé d'éléments de code se présentant sous une forme complexe, **caractérisé en ce qu**'il comporte les étapes suivantes :

   - réception de signaux selon au moins deux voies,
   - mélange des signaux de chacune des voies par un oscillateur dit local pour inverser la phase des signaux de l'une des voies,
   - démodulation des signaux au moyen d'une première branche de démodulation opérant avec lesdits élément de code d'étalement non-conjugués et d'au moins une deuxième branche de démodulation opérant avec lesdits éléments de code conjugués,
   - combinaison des signaux fournis par les deux branches pour reconstituer les données ainsi transmises.

**Claims**

1. An apparatus comprising a receiving device working with space diversity for signals modulated with spreading code coefficients in time and for signals received over at least two channels ( 17, 15), the receiving device comprising a mixer circuit (20) and a spreading code demodulation circuit (20, 31) in the form of demodulation branches which have code inputs, **characterized in that** the mixer circuit (20) shifts the phase of the signals of one of the channels, whereas the code inputs of one of the branches receive the spreading code and the inputs of at least another branch receive the conjugate spreading code.

2. An apparatus as claimed in claim 1, **characterized in that** the received signals before being mixed are broken down into complex signals and **in that** the mixer circuit has a mixing input for reversing the imaginary part of one of the received signals.

3. An apparatus as claimed in claim 1 or 2, **characterized in that** a combining circuit (35) is provided for combining the signals of the two branches.

4. A processing method for signals received over various channels, implemented in a system as claimed in one of the claims 1 to 3 and having been subjected to a time diversity via a spreading code formed by code elements which appear in a complex form, **characterized in that** it comprises the following steps:

   - reception of signals over at least two channels,
   - mixing of signals of each one of the channels by a local oscillator to reverse the phase of the signals of one of the channels,
   - demodulation of the signals by means of a first demodulation branch which operates with said non-conjugate spreading code elements and at least a second demodulation branch operating with said conjugate code elements,
   - combining signals supplied by the two branches to reconstruct the data thus transmitted.

**Patentansprüche**

1. Gerät mit einer in Raumdiversität arbeitenden Empfangsanordnung für durch Koeffizienten für Zeitverteilungscode modulierte Signale und für Signale, empfangen gemäß mindestens zwei Kanälen (17, 15), wobei die Empfangsanordnung einen Mischerschaltkreis (20) und einen Schaltkreis zur Demodulation durch Verteilungscodes (30, 31) enthält, gebildet aus Demodulationszweigen, versehen mit Codeeingängen, **dadurch gekennzeichnet, dass** der Mischerschaltkreis (20) die Signale einer der Wege in der Phase verschiebt, während die Codeeingänge einer der Zweige den Verteilungscode empfangen und die Eingänge mindestens eines anderen Zweigs den zugeordneten Verteilungscode empfangen.

2. Gerät nach Anspruch 1, **dadurch gekennzeichnet, dass** die empfangenen Signale vor der Mischung in komplexe Signale zergliedert werden und **dadurch**, dass der Mischerschaltkreis einen Mischereingang enthält, um den imaginären Teil eines der empfangenen Signale zu invertieren.

3. Gerät nach Anspruch 1 oder 2, **dadurch gekennzeichnet, dass** ein Kombinationsschaltkreis (35) für die Kombination der Signale der zwei Zweige vorgesehen ist.

4. Verfahren zur Verarbeitung der über mehrere Wege empfangenen Signale, umgesetzt in einem Gerät nach einem der Ansprüche 1 bis 3, die einer Zeitverteilung durch einen Verteilungscode unterzogen wurden, gebildet aus Elemente von Codes, die in einer komplexen Form erscheinen, **dadurch ge-**

**kennzeichnet, dass** es folgende Schritte enthält:

   Erhalt von Signalen gemäß mindestens zwei Kanälen,
   Mischung der Signale jeder der Wege durch einen so genannten lokalen Oszillator, um die Phase der Signale einer der Wege zu invertieren,
   Demodulation der Signale mittels einem ersten Demodulationszweig, der mit den besagten Elementen des nicht zugeordneten Verteilungscodes arbeitet, und mindestens einem zweiten Demodulationszweig, der mit den besagten zugeordneten Elementen des Codes arbeitet,
   Kombination der von den zwei Zweigen ausgegebenen Signale, um die so übertragenen Daten wiederherzustellen.

**FIG.1**